Europäisches Patentamt

European Patent Office

Office européen des brevets

(19)

(11) Veröffentlichungsnummer : **0 221 522 B1**

(12) # EUROPÄISCHE PATENTSCHRIFT

(45) Veröffentlichungstag der Patentschrift :
03.01.90

(21) Anmeldenummer : 86115169.4

(22) Anmeldetag : 31.10.86

(51) Int. Cl.$^5$ : **B 60 C 23/00**

(54) **Verfahren zum Ermitteln eines veränderlichen Luftdruckwertes eines Fahrzeugluftreifens und Anzeigen eines Druckwertes.**

(30) Priorität : 07.11.85 DE 3539489

(43) Veröffentlichungstag der Anmeldung :
13.05.87 Patentblatt 87/20

(45) Bekanntmachung des Hinweises auf die Patenterteilung : 03.01.90 Patentblatt 90/01

(84) Benannte Vertragsstaaten :
DE FR GB IT LU SE

(56) Entgegenhaltungen :
EP--A-- 0 157 205
DE--A-- 3 029 563
DE--A-- 3 413 209
US--A-- 4 529 961
INGENIEURS DE L'AUTOMOBILE, Nr. 8, November 1984, Seiten 86-91, Paris, FR; G. BEGHIN et al.: "Mesure de pression et surveillance de pneumatiques"

(73) Patentinhaber : UNIROYAL ENGLEBERT Reifen GmbH
Hüttenstrasse 7
D-5100 Aachen (DE)

(72) Erfinder : Gerresheim, Manfred, Dr.-Ing.Dipl.-Ing.
Martin-Luther-King-Strasse 42
D-5102 Würselen (DE)
Erfinder : Nitsch, Boris, Dipl.-Ing.
Monheimalle 2
D-5100 Aachen (DE)
Erfinder : Mauk, Gerhard, Dipl.-Ing.
Bleichenstrasse 49a
D-3050 Wunstorf 2 (DE)

EP 0 221 522 B1

## Beschreibung

Die Erfindung bezieht sich auf ein Verfahren, nach dem sich verändernde Luftdruckwerte eines Fahrzeugluftreifens ermittelt und übertragen werden. Dabei wird jeweils ein dem Luftdruckwert entsprechendes Informationssignal berührungslos von einem Meßwertgeber auf einen Meßwertempfänger übertragen und in einer Meßwert- oder Auswertschaltung oder elektronisch ausgewertet. Das Informationssignal wird mit vorliegenden Sollwerten mindestens für den Innenluftdruck des Fahrzeugluftreifens verglichen und ein davon abweichender Meßwert einschließlich dem Wert Null ermittelt. Dann wird ein dem Meßwert entsprechender Luftdruckzustand angezeigt. Bevorzugt wird er dem Fahrer des Fahrzeuges jeweils für jedes vorhandene, in Betrieb befindliche Fahrzeugrad angezeigt.

Zum Übertragen eines veränderlichen Meßwertes für den Reifendruck von Fahrzeugrädern ist ein Verfahren nach DE-A-30 29 563 bekannt, nach dem entweder das Informationssignal stets unabhängig von der Reifentemperatur und ein zugeordneter Sollwert entsprechend der Umgebungstemperatur veränderbar ist oder nach dem ein von der Umgebungstemperatur unabhängiger konstanter Sollwert erst oberhalb einer vorgegebenen Grenztemperatur unabhängig und unterhalb dieser Grenztemperatur abhängig von der Reifentemperatur ist.

Die Faktoren Außendruck, Reifeninnentemperatur und spezifisches Luftvolumen bestimmen den Reifendruck. Bei dem bekannten Verfahren werden Druck und Temperatur nicht so berücksichtigt, wie es für einen bestmöglichen Informationsstand des Fahrers angezeigt wäre.

Eine positive Änderung des atmosphärischen Druckes wirkt sich in einer negativen Reifendruckänderung identischer Größe aus, wobei regionale Außendruckänderungen von bis zu 0,1 bar vorliegen können und sich bei Höhendifferenzen der Außendruck je 1 000 m um rd 0,1 bar ändert. Temperaturänderungen haben identische prozentuale Druckänderungen zur Folge, wobei z. B. bei durchschnittlichen PKW-Reifenluftdrücken eine 10 °C Temperaturdifferenz einer etwa 0,1 bar großen Druckdifferenz entspricht. Bei Großreifen ist wegen des höheren Luftdruckes die Druckdifferenz größer. Eine positive Volumenänderung bewirkt eine negative Druckänderung, die prozentual bis zum 1,5 fachen größer sein kann. Die Differenzen zum Solldruck, die sich beim Fahrbetrieb ergeben können, erreichen bis zu 0,5 bar, selbst wenn ein Fahrer seiner Sorgfaltspflicht nachkommt und den Reifendruck regelmäßig überprüft. Verhält er sich dabei nicht, wie es die Richtvoraussetzung vorschreibt, kann die Differenz zum Solldruck größer sein. Läßt der Autofahrer die Richtvoraussetzung außeracht und überprüft den Reifendruck über längere Zeit nicht, kann die Differenz zum Solldruck im Jahreszeitraum bis zu 1 bar betragen. Dieser Zustand sollte ganz vermeidbar sein, mindestens soll alles getan werden, um ihn in dieser nachteiligen Größe nicht zu erhalten.

Ein Verfahren zum Ermitteln des sich ändernden Luftdruckes und eine Auswertung zum Anzeigen des aktuellen Zustandes soll die vorgenannten Faktoren berücksichtigen. Eine systematische Anzeige hilft, eine hohe aktive Sicherheit zu gewährleisten, wobei Sicherheit gegen Reifenausfall und verbessertes konstantes Fahrverhalten bedeutsam sind. Die Anzeige soll des weiteren einen verbesserten Wartungskomfort bieten, indem regelmäßig größere Luftdruckwartungsintervalle ermöglicht werden. Außerdem hilft der durch Anzeige bestmöglich herzustellende Reifenluftdruck Energie einzusparen durch geringen Rollwiderstand. Es ergibt sich insoweit eine höhere Wirtschaftlichkeit. Sie gilt auch für längere Reifenlebensdauer aufgrund gleichmäßigeren Abriebs.

Unter Berücksichtigung der vorgenannten Erkenntnisse besteht die Aufgabe der Erfindung darin, ein Verfahren zum Erfassen, Auswerten und Anzeigen des gleichgebliebenen oder geänderten Reifenluftdruckes zu schaffen, bei dem regional bedingte und jahreszeitlich sich ändernde Druck- und Temperatureinflüsse zuverlässig berücksichtigt werden.

Zu diesem Zweck sollen die Informationssignale mit entsprechend vorliegenden Sollwerten verglichen werden. Die durch Auswertung ermittelten Abweichungen sollen als aktuelle Reifenluftdruckzustände angezeigt werden. Die Druckzustände sollen zum einen einen für den Fahrbetrieb bestmöglichen Luftdruckbereich und zum anderen den darüber befindlichen Überdruckbereich und den darunter befindlichen Minderluftdruckbereich umfassen. Auf diese Weise werden zusätzlich zu den Werten innerhalb des Optimalbereichs auch die Werte aus nicht mehr das Optimum an Fahrsicherheit gewährleistenden Bereichen und die Werte, aufgrund derer der Fahrkomfort verbessert wird, miteinbezogen.

Die Erfindung löst die Aufgabe erfindungsgemäß dadurch, daß das Informationssignal mit mehreren bestimmten, jedoch wählbaren, je von einem für ein bestimmtes, wählbares Zeitintervall vorliegenden Reifenaußentemperatur- Mittelwert $T_a$ abhängigen Sollwertkurven S mit jeweilig zugeordnetem Toleranzbereich $S_{soll}$ verglichen und zu einem Zeitpunkt entsprechend mindestens eine Luftdruckabweichung des Reifenluftdruckes ermittelt, diese Abweichung abhängig von den Sollwerten der Sollwertkurven-Toleranzbereiche, den sogenannten Schwellbereichen, einem bestimmten Reifenluftdruckzustand zugeordnet und mindestens daraus ein oder der aktuelle Luftdruckzustand des Fahrzeugreifens angezeigt wird.

Das Verfahren beruht darauf, daß mehreren Sollwertkurven Bezugstemperaturen zugrundeliegen, die einen weiten Bereich, von zum Beispiel unterhalb 0 °C bis oberhalb 20 °C bzw. 30 °C, für die Auswertung abdecken. Das Informationssignal wird mit der Innentemperatur des Reifendruckmediums ausgewertet, wobei es mit jeweils aktuellen Toleranzwerten der Sollkurven verglichen wird. Die Toleranzwerte werden dabei entsprechend der Umgebungstemperatur verändert.

Regional und jahreszeitlich bedingte Druck- und Temperatureinflüsse werden berücksichtigt und die Anzeige liefert dadurch zuverlässige aktuelle Druckzustände.

Nach einem weiteren Verfahrensmerkmal können die Luftdrucksollwerte bevorzugt nach der Formel

$$p_s' = p_o' + \frac{(\delta p')}{(\delta T_i)} \cdot (T_i - T_{io})$$

ermittelt werden.

Es bedeuten hierbei

$p'$ Überdruck des Reifendruckmediums

$p'_s$ Soll-Reifenüberdruck

$p'_o$ einmalig festgesetzter Reifenüberdruck

$$p' \text{ (Überdruck)} = p_i \text{ (Innendruck)} - p_a \text{ (Außendruck)}$$

$T_i$ Innentemperatur Reifen

$T_{io}$ einmalig festgesetzte Innentemperatur Reifen.

Der in gebräuchlichen Tabellen angegebene Luftdruck ist ein Basisluftdruck in Bezug auf die Tragfähigkeit des Reifens. Im allgemeinen handelt es sich dabei um einen Mindestluftdruck. Die Luftdrücke sollen jedoch nicht nur der Auslastung des Reifens Rechnung tragen, sondern auch den Fahreigenschaften, der Höchstgeschwindigkeit, der Lage des Reifens am Fahrzeug, den Betriebsbedingungen und den konstruktiven Eigenschaften des Fahrzeugs.

Insbesondere für die Fahreigenschaften bei höheren Geschwindigkeiten sind die Luftdrücke aus Sicherheitsgründen zu erhöhen. Sie sind in der Regel um 0,1 bar je 10 km/h Stufung oberhalb 160 km/h bis 210 km/h zu erhöhen.

Zugunsten eines in diesem Zusammenhang verbesserten Fahrkomforts und zur Sicherung des Fahrbetriebs gegen Druckluftverlust kann ein Luftdruckzustand erfaßt und ausgewertet werden, auf dem basierend eine bestimmte Höchstgeschwindigkeit anzeigbar bzw. die Fahrgeschwindigkeit auf eine angemessene Geschwindigkeit begrenzbar ist.

Nach einem weiteren Verfahrensmerkaml wird das Informationssignal zusätzlich mit einem nach Richtlinie empfohlenen oder nach Norm vorgeschriebenen, einer Höchstgeschwindigkeit zugeordneten Sollwert des Reifenluftdruckes verglichen und ausgewertet und eine daraus resultierende Höchstgeschwindigkeit angezeigt. Diese Anzeige erlaubt dem Fahrer, daß er ohne hohen Luftüberdruck eine bestimmte Höchstgeschwindigkeit wählen und einhalten kann.

Nach einer abgeänderten Verfahrensweise kann für die Auswertung des Informationssignals anstelle von mehreren Sollwertkurven nur eine einzige bestimmte, jedoch wählbare Sollwertkurve vorgesehen werden.

Um den Fahrer über einen weiteren Betriebszustand zu unterrichten, der jetzt im Bereich des Minderluftdruckes liegt, kann nach einem weiteren Verfahrensmerkmal das Informationssignal zusätzlich mit einem bestimmten, wählbaren, einer Notlauffahrgeschwindigkeit zugeordneten Sollwert des Reifenluftdruckes verglichen und ausgewertet werden und daraus eine resultierende Höchstgeschwindigkeit oder der Notlaufzustand angezeigt werden. Ein solcher Luftdruckwert ist sinnvoll angezeigt zu werden bei Fahrzeugrädern, die trotz Druckluftverlust eine gewisse Zeit lang eine längere Strecke bei bestimmten Betriebsbedingungen gefahrlos benutzt werden können. In diesem Falle ist es wichtig zu wissen, welche Geschwindigkeit zu wählen bzw. einzuhalten ist, um den Notlauf nicht zu gefährden. Es kann auch ein Druck- und/oder Temperaturwert bei Notlauf bzw. eine daraus erzeugte Information angezeigt werden.

Nach einem weiteren Verfahrensmerkmal kann abhängig von der Einfederung des Fahrzeuges der Solldruckwert $p'_o$ aufgrund eines entsprechend vorliegenden Informationssignals nach der Auswertung geändert oder aus dem Einfederungs- Informationssignal und dem Luftdruckwert- Informationssignal ein neues Informationssignal gebildet und zum Bestimmen der Druckabweichung mit ausgewertet werden.

Die Übertragung der Informationssignale, die Auswertung und die Anzeige kann mit üblichen bekannten Mitteln und Methoden für berührungsloses Übertragen von Meßwerten und/oder auf elektronische Art und Weise erfolgen.

Anhand eines Ausführungsbeispiels ist das Verfahren nach Erfindung unter Zuhilfenahme von Diagrammen erläutert.

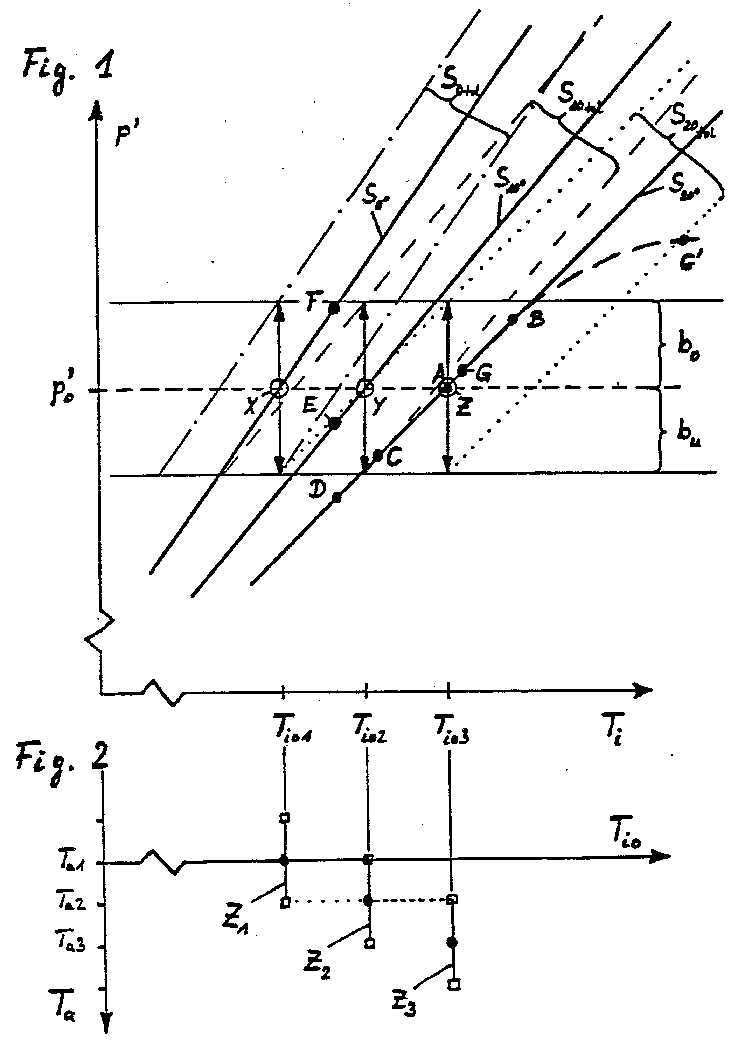

Im Diagramm gemäß Fig. 1 ist in der Ordinate der Reifenüberdruck $p'$ und in der Abszisse die Reifeninnentemperatur $T_i$ aufgetragen. Der festgesetzte Bezugswert für den Überdruck $p_o$ ist als gestrichelte Gerade dargestellt. Ihr sind ein oberer Toleranzbereich, der sogenannte Schwellbereich, bezeichnet mit $b_o$, und ein unterer Toleranzbereich, der Schwellbereich, bezeichnet mit $b_u$, von z. B. jeweils 0,1 bar zugeordnet.

Die einzelnen Sollwertkurven S sind entsprechnd den Bezugspunkten X, Y, Z auf der $p_o$ Geraden für

bestimmte Temperaturbezugsstellen $T_{io1}$, $T_{io2}$, $T_{io3}$ eingetragen, wobei $T_{io\ Index}$ jeweils eine Bezugstemperatur ist. Es können mehr oder weniger solcher Bezugstellentemperaturen vorgesehen sein. Die Kurven S berücksichtigen zugleich regionale und jahreszeitlich bedingte Einflüsse.

Die Bezugspunkte X, Y, Z entsprechen im Beispiel den Außentemperaturen 0 °C, 10 °C und 20 °C ; vgl. die Bezeichnung $S_{0°}$, $S_{10°}$, $S_{20°}$.

In Fig. 2 sind die Temperaturbezugspunkte angegeben, nach der die Außentemperaturen $T_a$, z. B. $T_{a1}$, $T_{a2}$, $T_{a3}$..., über der Bezugstemperatur $T_{io}$, hier die festgelegte Reifeninnentemperatur, aufgetragen sind.

Die Sollkurven S in Fig. 1 sind entsprechend den Temperaturstellen mit $S_{0°}$, $S_{10°}$, $S_{20°}$ bezeichnet. Sie haben linearen Verlauf. Jeder Sollkurve ist ein Toleranzbereich zugeordnet. Die Schwellbereiche genannten Toleranzbandbreiten sind mit $S_{0\ tol}$, $S_{10\ tol}$ und $S_{20\ tol}$ bezeichnet.

Die Funktion wird wie folgt erläutert.

Ist z. B. der Reifenluftdruck auf den 20 °C - Sollwert eingestellt, vgl. Punkt A in Fig. 1 (er stimmt mit dem Bezugswert Z überein), und betragen die Außen- und Innentemperaturen 28 °C, dann entspricht der Reifendruck dem höheren Wert ; vgl. Punkt B. Dieser Punkt liegt innerhalb des zulässigen Schwellbereichs, so daß nach Auswertung des Informationssignals kein Fehldruck (Überdruck) angezeigt wird.

Betragen hingegen zu einem anderen Zeitpunkt bei dem eingestellten Reifenluftdruck auf den 20 °C - Sollwert die Außen- und Innentemperaturen 8 °C, dann entspricht der Reifenluftdruck aktuell einem niedrigeren Druck, ausgedrückt als Minderluftdruck ; vgl. den Punkt D auf der Kurve $S_{20°}$ in Fig. 1.

Gleichzeitig ist beim Unterschreiten der Temperatur, hier $T_{a2}$, vgl. dazu auch das Diagramm gemäß Fig. 2, eine nächstliegende Sollwertkurve $S_{10°}$ aktuell geworden. Diese befindet sich mit ihrem Bezugspunkt Y an der Stelle $T_{io2}$. An dieser Stelle befindet sich die gemäß Fig. 2 dargestellte zugeordnete Kurve $Z_2$, die für die aktuelle Außentemperatur $T_{a2}$ zutrifft. Systematisch wurde Kurve $Z_3$ verlassen und auf die stets nächstliegende Kurve $Z_2$ übergegangen, weil Kurve $Z_3$ die Temperatur $T_{a2}$ nicht erfaßt.

Die Kurven $Z_1$, $Z_2$, $Z_3$... entsprechen in ihrer Zuordnung den Bezugstemperaturen $T_{io}$, $T_{i10}$, $T_{i20}$... Im Fallbeispiel wurde die Anwendung des Überwechselns auf die nächstliegende Sollwertkurve erläutert.

Da der aktuelle Luftdruck (vgl. D in Fig. 1) niedriger liegt als der Schwellbereich, wird nach Auswertung des Informationssignals ein Fehldruck angezeigt.

Hierauf wird der Reifenluftdruck korrigiert. Der aktuelle Druckwert entspricht jetzt dem Wert für Punkt E der Sollkurve für die 10° Temperatur. Dieser Zustand wird angezeigt.

Würde auf die Zuordnung $Z_1$, vgl. Fig. 2, übergegangen worden sein, hätte der vorher erwähnte Fehldruck auf einen Druck entsprechend Punkt F korrigiert werden sollen. Dann wäre dieser Druck angezeigt worden. Er befindet sich noch im Toleranzbereich.

Ausgehend vom Vorliegen eines Reifenluftdruckes und Temperatur gemäß Punkt G, vgl. Fig. 1, würden sich Druck und Temperatur während des Fahrbetriebes entsprechend Kurve $S_{20°}$ einstellen.

Im Falle einer Reifenundichtigkeit ändern sich Druck und Temperatur und es wird ein Punkt G' auf der gestrichelt dargestellten Kurve erreicht. Der Punkt G' liegt außerhalb des Toleranzbereichs $S_{20tol}$. Nach der Auswertung des Informationssignals wird Fehldruck (Minderdruck) angezeigt. Der Reifendruck ist hiernach entsprechend Kurve $S_{20°}$ zu korrigieren. Aufgrund der vorliegenden Sollkurven kann präzise und zuverlässig im Jahreszeitraum und regional bedingt ein aktueller Druckzustand nach Auswertung angezeigt und entsprechend gffs. korrigiert werden.

## Patentansprüche

1. Verfahren zum Ermitteln eines veränderlichen Luftdruckwertes eines Fahrzeugluftreifens, bei dem ein von einem Meßwertgeber abhängiges Informationssignal auf einen Meßwertempfänger übertragen, dieses in einer Auswerteschaltung oder Auswerte-Elektronik mit vorliegenden Sollwerten mindestens für den Luftdruck verglichen und eine Wertabweichung ermittelt sowie ein dem Meßwert entsprechender Luftdruckzustand angezeigt wird, dadurch gekennzeichnet, daß das Informationssignal mit mehreren bestimmten, jedoch wählbaren, je von einem für ein wählbares Zeitintervall vorliegenden Reifenaußentemperatur-Mittelwert ($T_a$) abhängigen Sollwertkurven (S) mit jeweilig zugeordnetem Toleranzbereich ($S_{tol}$) verglichen und entsprechend mindestens eine Abweichung des Reifenluftdruckes ermittelt und diese abhängig von den Sollwertkurventoleranzbereichen einem bestimmten Reifenluftdruckzustand zugeordnet und mindestens der aktuelle Luftdruckzustand des Fahrzeugluftreifens angezeigt wird.

2. Verfahren nach Anspruch 1, dadurch gekennzeichnet, daß das Informationssignal zusätzlich mit mindestens einem nach Richtlinie empfohlenen oder durch eine Norm vorgeschriebenen, einer Höchstgeschwindigkeit zugeordneten Reifenluftdrucksollwert verglichen, in einer Auswerteschaltung ausgewertet und eine daraus resultierende Höchstgeschwindigkeit angezeigt wird.

3. Abänderung des Verfahrens nach Anspruch 2, dadurch gekennzeichnet, daß für die Auswertung des Informationssignals anstelle von mehreren Sollwertkurven eine einzige bestimmte, jedoch wählbare Sollwertkurve vorliegt.

4. Verfahren nach einem der Ansprüche 1 bis 3, dadurch gekennzeichnet, daß das Informationssignal zusätzlich mit einem bestimmten, jedoch wählbaren, einer Notlauffahrgeschwindigkeit zugeordneten Reifenluftdrucksollwert verglichen, in einer Auswerteschaltung ausgewertet und eine daraus resultierende Höchstgeschwindigkeit oder ein Druck- und/oder Temperaturwert bei Notlauf bzw. eine daraus erzeugte Information angezeigt wird.

5. Verfahren nach einem der vorhergehenden Ansprüche, dadurch gekennzeichnet, daß abhängig von der Einfederung des Fahrzeugs der Solldruckwert p'$_0$ aufgrund eines entsprechend vorliegenden Informationssignals nach der Auswertung geändert oder daß aus Einfederungsinformationssignal und Luftdruckwertinformationssignal ein neues Informationssignal gebildet und zum Bestimmen der Druckabweichung mit ausgewertet wird.

6. Verfahren nach einem der vorhergehenden Ansprüche, bei dem die Sollluftdruckwerte ermittelt und in die Auswerteschaltung eingegeben werden, dadurch gekennzeichnet, daß die Solldruckwerte nach der Formel

$$p'_s = p'_0 + \frac{(\delta p')}{(\delta T_i)} \cdot (T_i - T_{io})$$

ermittelt werden, wobei
p' Reifendruckmedium-Überdruckwert
p'$_s$ Soll-Reifenüberdruckwert
p'$_0$ einmalig festgesetzter Reifenüberdruckwert.
T$_i$ Reifen-Innentemperatur
T$_{io}$ einmalig festgesetzte Reifen-Inentemperatur
T$_a$ Reifen-Außentemperatur bedeuten.

## Claims

1. Method of determining a variable air pressure value of a pneumatic vehicle tyre, wherein an information signal, which is dependent on a measured value transmitter, is transmitted to a measured value receiver, the signal is compared with existing desired values, at least for the air pressure, in an evaluation circuit or evaluation electronics, a value deviation is determined, and an air pressure state corresponding to the measured value is indicated, characterised in that the information signal is compared with a plurality of predetermined, but selectable, desired value curves (S) which are each dependent on a mean value (T$_a$) for the external temperature of the tyre, which value is present for a selectable time interval, and the desired value curves have a respectively associated tolerance range (S$_{tol}$), and accordingly the information signal determines at least one deviation in the air pressure of the tyre, and this deviation is associated with a predetermined air pressure state of the tyre depending on the desired value curve tolerance ranges, and at least the actual air pressure state of the pneumatic vehicle tyre is indicated.

2. Method according to claim 1, characterised in that the information signal is additionally compared with at least one desired value for the air pressure of the tyre, which desired value is recommended according to guidelines or is prescribed by a standard and is associated with a maximum speed, the signal is evaluated in an evaluation circuit, and a resultant maximum speed is indicated.

3. Modification to the method according to claim 2, characterised in that, for the evaluation of the information signal, there is one single, predetermined but selectable, desired value curve instead of several desired value curves.

4. Method according to one of claims 1 to 3, characterised in that the information signal is additionally compared with a predetermined, but selectable, desired value for the air pressure of the tyre, which value is associated with an emergency running speed, and the signal is evaluated in an evaluation circuit, and a resultant maximum speed or a pressure and/or temperature value during emergency running is indicated, or respectively information produced therefrom is indicated.

5. Method according to one of the preceding claims, characterised in that, depending on the suspension of the vehicle, the desired pressure value p'$_0$ is changed on the basis of a correspondingly existent information signal after evaluation, or in that a new information signal is formed from the suspension information signal and air pressure value information signal and is also evaluated to determine the pressure difference.

6. Method according to one on the preceding claims, wherein the desired air pressure values are determined and passed to the evaluation circuit, characterised in that the desired pressure values are determined according to the formula

$$p'_s = p'_0 + \frac{(\delta p')}{(\delta T_i)} \cdot (T_i - T_{io})$$

where
  $p'$ = excess pressure value for the pressure medium of the tyre ;
  $p'_s$ = desired excess pressure value for the tyre ;
  $p'_o$ = once established excess pressure value for the tyre ;
  $T_i$ = internal temperature of the tyre ;
  $T_{io}$ = once established internal temperature of the tyre ;
  $T_a$ = external temperature of the tyre.

**Revendications**

1. Procédé pour déterminer une valeur de pression d'air variable d'un pneumatique pour véhicule, selon lequel un signal d'information, fonction d'un capteur de valeur de mesure, est transmis à un récepteur de valeur de mesure, ce signal est comparé dans un circuit d'évaluation ou un système électronique d'évaluation avec des valeurs de consigne existantes au moins pour la pression d'air et un écart de valeurs est obtenu de même qu'un état de pression d'air correspondant à la valeur de mesure est affiché, caractérisé en ce que le signal d'information est comparé avec plusieurs courbes de valeurs de consigne (S) qui sont déterminées, mais cependant sélectionnables, qui sont chacune fonction d'une valeur moyenne de température extérieure de pneumatique ($T_a$) existant dans un intervalle de temps sélectionnable et qui ont chacune une plage de tolérance correspondante ($S_{tol}$), et en correspondance au moins un écart de la pression d'air de pneumatique est déterminé et cet écart est associé, en fonction des plages de tolérances des courbes de valeurs de consigne, à un état déterminé de pression d'air de pneumatique et au moins l'état réel de pression d'air du pneumatique du véhicule est affiché.

2. Procédé selon la revendication 1, caractérisé en ce que le signal d'information est comparé additionnellement avec au moins une valeur de consigne de pression d'air de pneumatique, recommandée en fonction de directives ou bien prescrite par une norme et associée à une vitesse maximale, ce signal est évalué dans un circuit d'évaluation et une vitesse maximale en résultant est affichée.

3. Variante du procédé selon la revendication 2, caractérisée en ce que, pour l'évaluation du signal d'information, il est prévu à la place de plusieurs courbes de valeurs de consigne une seule courbe de valeurs de consigne déterminée mais cependant sélectionnable.

4. Procédé selon une des revendications 1 à 3, caractérisé en ce que le signal d'information est comparé additionnellement avec une valeur de consigne de pression d'air de pneumatique déterminée, cependant sélectionnable et associée à une vitesse de marche en cas d'urgence, ce signal est évalué dans un circuit d'évaluation et une vitesse maximale en résultant ou bien une valeur de pression et/ou de température en cas d'urgence, ou bien une information en résultant, est affichée.

5. Procédé selon une des revendications précédentes, caractérisé en ce que, en fonction de la suspension du véhicule, la valeur de consigne de pression $p'_o$ est modifée, sur la base d'un signal d'information existant en correspondance, après l'évaluation ou bien en ce que, à partir du signal d'information concernant la suspension et à partir du signal d'information concernant la valeur de pression d'air, un nouveau signal d'information est produit et est évalué en vue de la détermination de l'écart de pression.

6. Procédé selon une des revendications précédentes, selon lequel les valeurs de pression d'air de consigne sont déterminées et introduites dans le circuit d'évaluation, caractérisé en ce que les valeurs de pression de consigne sont déterminées d'après la formule

$$p'_s = p'_o + \frac{(\delta p')}{(\delta T_i)} \cdot (T_i - T_{io})$$

où :
  $p'$ : valeur de surpression du fluide de gonflage du pneumatique
  $p'_s$ : valeur de surpression de consigne du pneumatique
  $p'_0$ : valeur de surpression de pneumatique établie à l'origine
  $T_i$ : température intérieure de pneumatique
  $T_{io}$ : température intérieure de pneumatique établie à l'origine
  $T_a$ : température extérieure de pneumatique.

Fig. 1

Fig. 2